# EUROPÄISCHE PATENTSCHRIFT

(11) **EP 1 071 311 B1**
(45) Veröffentlichungstag und Bekanntmachung des Hinweises auf die Patenterteilung: **08.06.2005**
(21) Anmeldenummer: 00810646.0
(22) Anmeldetag: 20.07.2000
(51) Int. Cl.: H05B 3/56, H02G 15/18

(54) **Kapselung für das An- oder das Abschlussende eines elektrischen Heizbandkabels und Verfahren zu seiner Herstellung**
Encapsulation for electrical heating ribbon cable connecting or closing and its manufacturing process
Encapsulage de l'extremité avant ou arrière d'un cable de chauffage électrique et son procédé de fabrication

(30) Priorität: 22.07.1999 CH 134199
(43) Veröffentlichungstag der Anmeldung: 24.01.2001
(73) Patentinhaber: BACAB SA, 1450 Sainte-Croix (CH)
(72) Erfinder: Michelbach, Thomas, 97922 Lauda-Beckstein (DE); Colpa, Mario, 1400 Yverdon-les-Bains (CH); Bolleter, Werner, 8037 Zürich (CH)
(74) Vertreter: Lauer, Joachim

(56) Entgegenhaltungen:
- EP-A2- 0 893 857
- DE-A- 3 644 609
- DE-U- 8 503 674
- FR-A- 2 683 419
- GB-A- 1 167 343

## Beschreibung

### TECHNISCHES GEBIET

Die vorliegende Erfindung betrifft eine Kapselung für das An- oder das Abschlussende eines elektrischen Heizbandkabels, welches im Kern mehrere elektrische Leiter und über dem Kern einen isolierenden Aussenmantel aus einem thermoplastischen Fluorpolymer-Material aufweist. Die Erfindung betrifft auch ein Verfahren zur Herstellung einer solchen Kapselung.

### STAND DER TECHNIK

Üblicherweise sind bei den Heizbandkabeln der betrachteten Art zwei der Leiter innen und parallel zu einander angeordnet, die auch als Buswires bezeichnet werden. Eingebettet sind diese z.B. in einem Kunststoffmaterial, welches durch entsprechende Zusätze schwach leitend ausgebildet ist. Wird eine Spannung an die beiden Buswires angelegt (z.B. eine übliche Netzwechselspannung) so kommt es zu einem verlustbehafteten Stromfluss zwischen den beiden Buswires durch das schwach leitende Material hindurch und zur Entstehnung von Verlustwärme. Man bezeichnet diese Art von Heizbändern auch als selbstbegrenzende Heizbandkabel bzw. als Parallelleitungsheizer. Anstatt über ein schwach leitendes Kunststoffmaterial könnten die beiden Buswires auch über einen Widerstandsdraht verbunden sein, der um sie herumgewendelt und in regelmässigen Abständen mit ihnen verschweisst ist.

Üblicherweise sind die Heizbandkabel der betrachteten Art nach Art eines Koaxialkabels auch noch abgeschirmt und weisen insofern über einer Zwischenisolierung noch eine leitende Schicht z.B. in Form eines Drahtgeflechtes auf. Erst über dieser Abschirmung kommt dann der erwähnte Aussenmantel.

Zum Anschliessen der beiden Buswires sowie der Abschirmung werden diese ein Stück weit freigelegt und dann einzeln mit Anschlusslitzen z.B. über Quetschverbinder verbunden. Zur Isolation sowie zum Schutz gegen äussere Einflüsse wird der Verbindungsbereich nachfolgend meist verkapselt, was üblicherweise einfach durch Verkleben geschieht. Durch Verkleben verkapselt werden auch die freien Enden der Heizbänder, siehe z.B. EP 0 893 857.

Die eingangs erwähnten, sehr temperaturbeständigen thermoplastischen Fluorpolymere lassen sich auf Grund ihrer speziellen Oberflächeneigenschaften mit einer äusserst geringen Adhäsion mit den heutigen Klebeverfahren jedoch nur bedingt dicht und beständig verkleben. Insbesondere sind die auf diese Weise hergestellten Kapselungen recht empfindlich gegen mechanische Belastungen.

### DARSTELLUNG DER ERFINDUNG

Die durch die Erfindung vorgeschlagene Kapselung, wie sie im Patentanpruch 1 gekennzeichnet ist, umfasst ein Formteil aus einem thermoplastischen Fluorpolymermaterial, weches mit demjenigen des Aussenmantels des Heizbandkabels verschweissbar und hermetisch dicht und dauerhaft verschweisst ist. Die erfindungsgemässe Kapselung eignet sich insbesondere für Anwendungen in einem rauhen sowie sicherheitstechnisch anspruchsvollen Umfeld, wie beispielsweise im Flugzeugbau.

Bei Heizbändern der betrachteten Art wird der Aussenmantel üblicherweise auf den die Leiter enthaltenden Kern aufextrudiert. Das für die erfindungsgemässe Kapselung verwendete Formteil ist nun bevorzugt so gestaltet, dass es während des Exstrusionsvorgangs des Heizband-Aussenmantels den Extruder mit durchlaufen kann und somit vom Heizband-Aussenmantel ebenfalls umhüllt wird. Ein entsprechendes Verfahren ist in Anspruch 11 gekennzeichnet.

Vorteilhafte und deshalb bevorzugte Ausgestaltungen und Weiterbildungen der Erfindung sind jeweils in den abhängigen Ansprüchen gekennzeichnet.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: eine teilweise aufgeschnittene Kapselung nach der Erfindung am Anschlussende eines Heizbandkabels und zwar unter a) in Aufsicht und unter b) in einer Seitenansicht;
- Fig. 2: ein Formteil für eine Kapselung gemäss Fig. 1 und zwar unter a) in Aufsicht, unter b) im Schnitt I-I und unter c) im Schnitt II-II;
- Fig. 3: Abschnitte eines Endlosbandes zusammengesetzt aus mehreren Heizbandkabeln und Anschlusslitzen mit einem einheitlich und über die Verbindungsstellen hinweg aufextrudierten Aussenmantel; und
- Fig. 4: ein Formteil für eine erfindungsgemässe Kapselung am Abschlussende eines Heizbandkabels.

### WEGE ZUR AUSFÜHRUNG DER ERFINDUNG

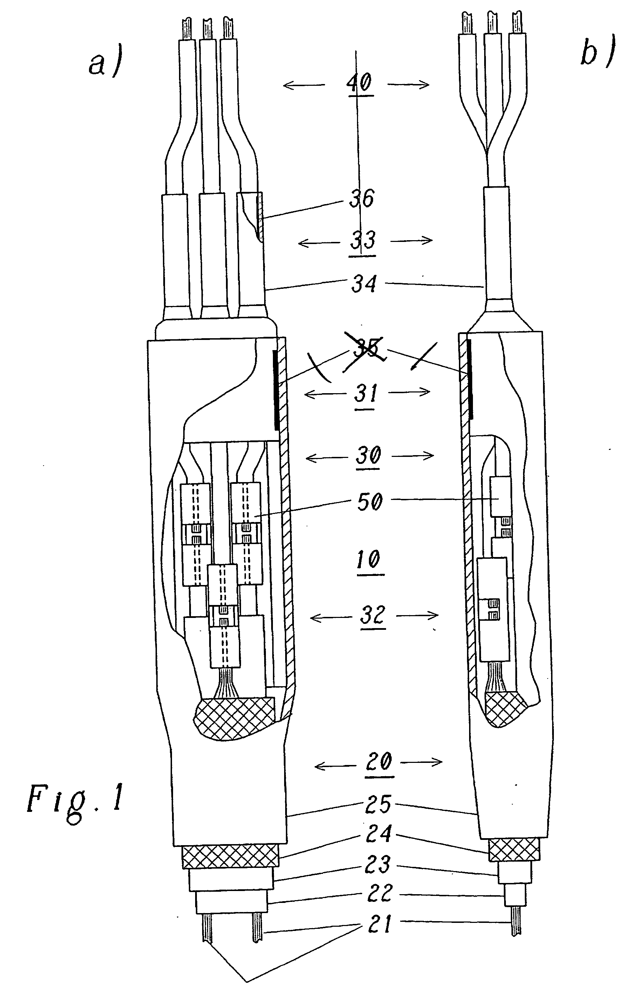

In Fig. 1 bezeichnet 10 eine Kapselung nach der Erfindung am Anschlussende eines Heizbandkabels 20. Von dem Heizbandkabel 20 ist nur ein kurzer Abschnitt dargestellt. Zudem sind seine Komponenten in unterschiedlicher Länge gezeichnet, um sie einzeln kenntlich zu machen. Das Heizbandkabel 20 weist einen Kern auf, der zwei zueinander parallele und in einer Art Widerstandmaterial (Core-Material) 22 eingebettete Leiter (Buswires) 21, eine Isolierung 23 und eine Abschirmung 24 umfasst. Der Kern 21 - 24 ist umschlossen von einem Aussenmantel 25 aus einem thermoplastischen Fluorpolymer. Für das Core-Material 22 und die Isolierung 23 kann ebenfalls ein thermoplastisches Polymer verwendet sein, wobei das Core-Material dann mit gewissen Zusätzen versehen sein muss, um es teilweise leitfähig zu machen.

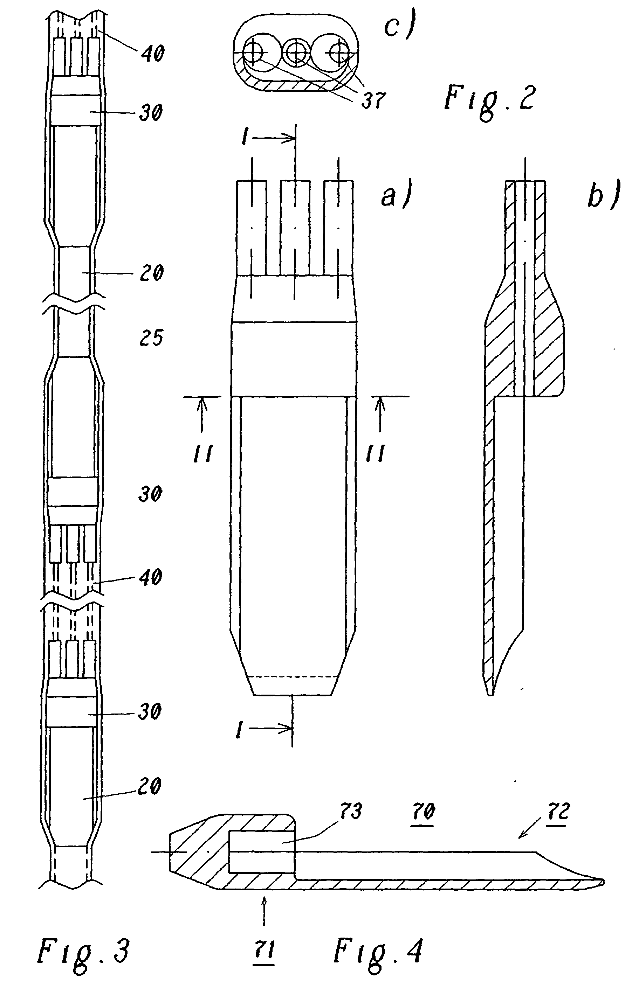

Mit 30 bezeichnet ist ein Formteil, welches eine mittleren Abschnitt 31 sowie zwei weitere, beidseitig an diesen angrenzende Abschnitte 32 und 33 aufweist. Der mittlere Abschnitt 31 ist bis auf drei Durchgangsöffnungen (37 in Fig. 2) relativ massiv ausgebildet und weist eine zylindrische Mantelfläche auf. Der heizbandseitig an den ersten Abschnitt 31 angrenzende Abschnitt 32 ist etwa halbschalenförmig ausgebidlet. In dem Abschnitt 33 sind drei rohrförmige Stutzen 34 an den mittleren Abschnitt 31 mit dessen Durchgangsöffnungen fluchtend angeformt.

Durch die rohrförmigen Stutzen 34 sowie die Durchgangsöffnungen im ersten Abschnitt 31 des Formteils 30 durchgeführt sind drei einzeln isolierte Anschlusslitzen 40. Das Material für die Isoliermäntel dieser Anschlusslitzen ist wieder ein thermoplastisches Fluorpolymer, welches sich schweisstechnisch mit dem Material des Formteils 30 verträgt. Die abisolierten Enden der Anschlusslitzen 40 sind im halbschalenförmig ausgebildeten Bereich 32 des Formteils 30 mit den ebenfalls freigelegten Enden der Heizbandleiter 21 sowie mit einem zusammengedrehten Ende der Abschirmung 24 über Quetschverbinder 50 verbunden. Die Quetschverbinder 50 sind aussenseitig mit einer Isolierschicht versehen und können deshalb, wie in Fig. 1 dargestellt, in Anlage aneinander platzsparend sowie lagestabilisiert im dem halbschalenförmigen Abschnitt 32 untergebracht werden.

Der Aussenmantel 25 des Heizbandkabels 20 ist über den halbschalenförmig ausgebildeten Abschnitt 32 des Formteils 30 und die darin angeordneten Quetschverbinder 50 bis hin zu dem mittleren Abschnitt 31 vorgezogen und dort mit der zylindrischen Mantelfläche dieses Abschnitts über deren gesamten Umfang verschweisst. Desweiteren sind jeweils auch noch die Rohrstutzen 34 vollumlaufend mit dem Isoliermänteln der Anschlusslitzen 40 verschweisst. Eine dieser Schweissungen ist schematisch angedeutet und mit 36 bezeichnet. Die Schweissungen sind möglich, weil für das Formteil 30, den Heizband-Aussenmantel und die Isoliermäntel der Anschlusslitzen entweder dasselbe, jedenfalls aber ein miteinander schweisstechnisch verträgliches)Material verwendet ist.

Der Heizband-Aussenmantel 25 bildet auf die beschriebene Weise zusammen mit dem Formteil 30 eine hermetisch gas- und feuchtigkeitsdichte Kapselung für den Anschlussbereich zwischen den Heizband-Leitem 21, 24 und den Anschlusslitzen 40. Dies ist sehr wichtig, weil es durch Feuchtigkeit im Verbindungsbereich zu einem sogenannten Arc-Tracking im Heizbandkabel (einer Art sich fortpflanzender Kabelbrand) kommen kann. Hierzu kann unter Umständen bereits der Zutritt von salzhaltiger Luftfeuchtigkeit genügen. Durch die Temperaturbeständigkeit des Fluorpolymermaterials ist die Kapselung auch ausserordentlich temperaturbeständig. Durch die Verschweissung des Aussenmantels 25 auf und mit dem relativ massiven Mittelteil 31 sowie durch Aufnahme der Quetschverbinder in dem halbschalenförmigen Abschnitt 32 ergibt sich insgesamt eine gute mechanische Stabilität, die auch widerstandsfähig gegen Biege- und Vibrationsbelastungen ist.

Um das erwähnte Arc-Tracking auch dann zu vermeiden, wenn z.B. nach einer Beschädigung des Heizband-Aussenmantels 25 Feuchtigkeit irgendwo in das Kabel ein und z.B. entlang von dessen Abschirmung bis in den Verbindungsbereich vordringt, kann zusätzlich vorgesehen sein, die Kapselung mit einem Dichtungsmittel zusätzlich auzufüllen. Ein beispielsweise geeignetes Dichtungsmittel ist ein Polyurethan-Gel. Dieses ist flexibel und dichtet die Leiterverbindungen in der Kapselung sicher ab. Andererseits kann der Verbindungsbereich auch mit einem temperaturbeständigen Epoxidharz oder ein Cyan-Acrylat-Klebstoff ausgegossen werden. Diese Isolationsmaterialien sind bzw. werden allerdings fest und dichten nur, wenn sie eine gewissen Haftung mit dem Fluorpolmermaterial im Verbindungsbereich eingehen. Durch die Einbettung in die äussere Kapselung ist die mechanische Festigkeit dieser Haftung jedoch weitaus weniger kritisch als beim eingangs erwähnten Stand der Technik, wo ausschliesslich derartige Klebemassen verwendet sind. Die Haftung dieser Materialien lässt sich im übrigen durch eine vorgängige Corona- oder Plasmabehandlung des Fluorpolymermaterials noch verbessern.

Fig. 2 zeigt in drei Ansichten ein Formteil 20, wie es bevorzugt für eine Kapselung 10 nach der Erfindung verwendet wird. Anhand dieser Darstellung sind die vorstehenden Erläuterungen zum dem Formteil 20 von Fig. 1 noch besser verständlich. Insbesondere sind in Fig. 2 c) auch die Durchgangsöffnungen 37 für die Anschlusslitzen 40 im ersten Abschnitt 31 des Formteils 30 zu erkennen.

Anhand von Fig. 3 soll nun erläutert werden, wie sich eine Kapselung nach der Erfindung besonders einfach herstellen lässt. Hierbei werden zunächst eine Vielzahl von Heizband-Kern-Stücken (Komponenten 21 -24) , Anschlusslitzen 40 sowie Formteilen 30 mit jeweils zwei Anschluss- bzw. zwei Abschlussenden gegeneinander gerichtet zu einem quasi endlosen Band verbunden, wie dies in Fig. 3 ersichtlich ist. Sodann wird mit einem geeigneten Extruder der Aussenmantel 25 auf das Band durchgehend aufextrudiert, d.h. auch über die Formteile 20 und die Anschlusslitzen 40 hinweg. Um dies zu ermöglichen oder zu erleichtern, ist das Formteil 30 bevorzugt als ein längliches Teil mit annährend demselben Querschnitt wie das Heizbandkabel 20 ausgebildet. Nachfolgend wird das so erhaltenene Band in einzelne Abschnitte unterteilt und zwar so, dass jeweils ein Stück Heizbandkabel 20 mit einer Kapselung 10 nach der Erfindung an wengistens einem Ende erhalten wird. Sodann wird der Teil des Aussenmantels 25 entfernt, der die Rohrstutzen 34 sowie die Anschlusslitzen 40 überdeckt. Schliesslich werden noch die erwähnten Verschweissungen vorgenommen.

Fig. 4. zeigt ein Formteil 70, wie es mit Vorteil für eine Kapselung nach der Erfindung am Abschlussende des Heizbandkabels verwendet wird. Das Formteil 70 besteht wieder aus einem thermoplastischen Fluorpolymermaterial. Anders als das Formteil 30 weist das Formteil 70 keine Rohrstutzen auf und besitzt in seinem Abschnitt 71 auch nur ein Sackloch 73, in welches ein Ende eines Heizband Kernes eingesteckt werden kann. Ein dem Abschnitt 32 des Formteils 30 entspechender halbschalenförmiger Abschnitt 72 ist jedoch vorgesehen. Wie bei der vorbeschriebenen Kapselung am Anschlussende wird auch hier der Aussenmantel des Heizbandkabels bis in den Bereich des Abschnitts 71 vorgezogen und dort mit der Mantelfläche des Formteils 70 verschweisst.

## Patentansprüche

1. Kapselung (10) für das An- oder das Abschlussende eines elektrischen Heizbandkabels (20), welches im Kern mehrere elektrische Leiter (21,24) und über dem Kem einen isolierenden Aussenmantel (25) aus einem thermoplastischen Fluorpolymer-Material aufweist, **dadurch gekennzeichnet, dass** ein Formteil (30, 70) verwendet wird, welches einen Endabschnitt des Heizband-Kerns aufnimmt und welches ebenfalls aus einem thermoplastischen Fluorpolymer-Material besteht, welche mit dem des Heizband-Aussenmantels (25) verschweissbar und so verschweisst ist, dass es zusammen mit diesem das An- oder das Abschlussende hermetisch dicht umschliesst.

2. Kapselung nach Anspruch 1, **dadurch gekennzeichnet, dass** das Formteil (30,70) einen ersten Abschnitt (31,71) mit einer zylindrischen Mantelfläche und heizbandseitig an diesen angrenzend einen zweiten Abschnitt (32,72) aufweist, welcher halbschalenförmig ausgebildet ist und dass der Endabschnitt des Heizband-Kerns in den zweiten, halbschalenförmigen Abschnitt eingelegt und der Heizband-Aussenmantel (25) über den zweiten Abschnitt (32,72) hinweggeführt und jenseits desselben mit der zylinderischen Mantelfläche des ersten Abschnitts (31,71) verschweisst ist.

3. Kapselung nach Anspruch 2, **dadurch gekennzeichnet, dass** am Anschlussende des Heizbandkabels (20) freie Enden der Leiter des Heizbandkabels einzeln mit abisolierten Enden von isolierten Anschlusslitzen (40) verbunden sind, wobei die Anschlusslitzen (40) durch mindestens eine, vorzugsweise jedoch durch jeweils eine Öffnung (37) in dem ersten Abschnitt (31) des Formteils (30) durchgeführt sind.

4. Kapselung nach Anspruch 3, **dadurch gekennzeichnet, dass** die freien Enden der Leiter (21,24) des Heizbandkabels (20) über Quetschverbinder (50) mit den abisolierten Enden der Anschlusslitzen (40) verbunden sind und dass die Quetschverbinder (50) in dem halbschalenförmigen zweiten Abschnitt (32) des Formteils (30) angeordnet sind.

5. Kapselung nach einem der Ansprüche 3 oder 4, **dadurch gekennzeichnet, dass** das Formteil (30) in einem dritten, dem zweiten Abschnitt (32) diametral gegenüberliegenden Abschnitt (33) mehrere, an dem ersten Abschnitt (31) angeformte rohrförmige Stutzen (34) für die Durchführung der Anschlusslitzen (40) aufweist.

6. Kapselung nach Anspruch 5, **dadurch gekennzeichnet, dass** die Isolation der Anschlusslitzen (40) aus demselben Material wie das Formteil (30) besteht und dass die Isolation der Anschlusslitzen (40) im dritten Abschnitt (33) mit der Innenfläche der Stutzten (34) dicht verschweisst ist .

7. Kapselung nach einem der Ansprüche 1 - 6, **dadurch gekennzeichnet, dass** der Endabschnitt des Heizband-Kerns in dem Formteil (30, 70) mit einem Dichtungsmittel, insbesondere einem Polyurethan-Gel oder einem temperaturbeständigen Epoxidharz oder Cyan-Acrylatklebstoff, versiegelt ist.

8. Kapselung nach einem der Ansprüche 1 - 7, **dadurch gekennzeichnet, dass** der Kern des Heizbandkabels (20) zwei parallele, für die Stromführung vorgesehene, parallel nebeneinander und in einem Widerstandsmaterial (22) eingebettete Leiter (21), eine diese Leiter umschliessende Isolierung (23) und diese herum eine leitende Abschirmung (24) aufweist.

9. Kapselung nach Anspruch 2, **dadurch gekennzeichnet, dass** am Abschlussende des Heizbandkabels (20) der Endabschnitt des Heizband-Kerns in dem Formteil (70) von dessen zweitem Abschnitt (72) aus in ein Sackloch (73) in dessen erstem Abschnitt (71) eingesteckt ist.

10. Kapselung nach einem der Ansprüche 1 bis 9, **dadurch gekennzeichnet, dass** das Formteil (30,70) als ein längliches Teil mit annährend demselben Querschnitt wie das Heizbandkabel (20) ausgebildet ist.

11. Verfahren zur Herstellung einer Kapselung (10) für das An- oder Abschlussende eines elektrischen Heizbandkabels (20), welches im Kern mehrere elektrische Leiter (21, 24) und über dem Kern einen isolierenden Außenmantel (25) aus einem thermoplastischen Fluorpolymer-Material aufweißt,
**dadurch gekennzeichnet, daß**
ein Formteil (30, 70) verwendet wird, welches einen Endabschnitt des Heizband-Kerns aufnimmt und welches ebenfalls aus einem thermoplastischen Fluorpolymer-Material besteht, welches mit dem Heizband-Außenmantel (25) verschweißbar ist, daß das Formteil (30, 70) zusammen mit dem Kern des Heizbandkabels einen Extruder beim Aufbringen des Heizband-Außenmantels (25) durchläuft,
und daß das thermoplastische Fluorpolymer-Material des Formteils (30, 70) mit dem thermoplastischen Fluorpolymer-Material des Heizband-Außenmantels (25) so verschweißt wird, daß es zusammen mit diesem das An- oder Abschlussende hermetisch dicht umschließt.

12. Verfahren nach Anspruch 11, **dadurch gekennzeichnet, dass** der Aussenmantel (25) des Heizbandkabels (20) mit dem Formteil (30,70) mittels eines beheizbaren Zweibacken-Werkzeug verschweisst wird, wobei das Verschweissen vorzugsweise in zwei Stufen erfolgt derart, das in der ersten Stufe das Fluorpolymer-Material des Formteils und des Aussenmantels nur angeschmolzen und erst in der zweiten Stufe unter Druckeinwirkung miteinander verschmolzen wird.

13. Verfahren nach einem der Ansprüche 11 oder 12 zur Herstellung einer Kapselung (10) nach einem der Ansprüche 6 - 8, **dadurch gekennzeichnet**, das die Isolation der Anschlusslitzen (40) in einem separaten Verschweiss-Vorgang mit der Innenfläche der Stutzten (24) verschweisst wird.

## Claims

1. An encapsulation (10) for the connecting end or the terminal end of an electric strip heater cable (20) that comprises several electric conductors (21, 24) in the core and an insulating outer sheath (25) of a thermoplastic fluoropolymer material arranged thereon, **characterized in that** a moulded part (30, 70) is used that receives an end section of the strip heater core and also consists of a thermoplastic fluoropolymer material that can be welded to the outer sheath (25) of the strip heater, wherein the moulded part is welded to the outer sheath in such a way that the moulded part and the outer sheath tightly seal the connecting end or the terminal end in a hermetic fashion.

2. The encapsulation according to Claim 1, **characterized in that** the moulded part (30, 70) comprises a first section (31, 71) with a cylindrical outer surface and a second section (32, 72) on the strip heater side that is situated adjacent to the first section and realized in a shell-shaped fashion, and **in that** the end section of the strip heater core is placed into the second shell-shaped section and the outer sheath (25) of the strip heater is slipped over the second section (32, 72) such that it can be welded to the cylindrical outer surface of the first section (31, 71) on the other side of the second section.

3. The encapsulation according to Claim 2, **characterized in that** the free ends of the conductors of the strip heater cable are individually connected to the stripped ends of insulated pigtails (40) on the connecting end of the strip heater cable (20), wherein the pigtails (40) lead through at least one opening, preferably through one respectively assigned opening (37), in the first section (31) of the moulded part (30).

4. The encapsulation according to Claim 3, **characterized in that** the free ends of the conductors (21, 24) of the strip heater cable (20) are connected to the stripped ends of the pigtails (40) by means of crimp connectors (50), and **in that** the crimp connectors (50) are arranged in the shell-shaped second section (32) of the moulded part (30).

5. The encapsulation according to Claim 3 or 4, **characterized in that** the moulded part (30) contains several tubular connection pieces (34) that are integrally moulded onto the first section (31) and serve for leading through the pigtails (40), namely in a third section (33) that lies diametrically opposite of the second section (32).

6. The encapsulation according to Claim 5, **characterized in that** the insulation of the pigtails (40) consists of the same material as the moulded part (30), and **in that** the insulation of the pigtails (40) is tightly welded to the inner surfaces of the connection pieces (34) in the third section (33).

7. The encapsulation according to one of Claims 1-6, **characterized in that** the end section of the strip heater cable is sealed in the moulded part (30, 70) by means of a sealing medium, particularly a polyurethane gel or temperature-resistant epoxy resin or cyanoacrylate adhesive.

8. The encapsulation according to one of Claims 1-7, **characterized in that** the core of the strip heater cable (20) comprises two parallel conductors (21) that are provided for carrying a current and embedded parallel to one another in a high-resistivity material (22), an insulation (23) surrounding these conductors and a conductive shielding (24) arranged around said insulation.

9. The encapsulation according to Claim 2, **characterized in that** the end section of the strip heater core is inserted into the moulded part (70) on the terminal end of the strip heater cable (20), namely from the second section (72) of the moulded part into a blind hole (73) in its first section (71).

10. The encapsulation according to one of Claims 1-9, **characterized in that** the moulded part (30, 70) is realized in the form of an elongated part that approximately has the same cross section as the strip heater cable (20).

11. A method for manufacturing an encapsulation (10) for the connecting end or the terminal end of an electric strip heater cable (20) that comprises several electric conductors (21, 24) in the core and an insulating outer sheath (25) of a thermoplastic fluoropolymer material arranged thereon, **characterized in that** a moulded part (30, 70) is used that receives an end section of the strip heater core and also consists of a thermoplastic fluoropolymer material that can be welded to the outer sheath (25) of the strip heater, **in that** the moulded part (30, 70) passes through an extruder together with the core of the strip heater cable during the application of the outer sheath (25) of the strip heater, and **in that** the thermoplastic fluoropolymer material of the moulded part (30, 70) is welded to the thermoplastic fluoropolymer material of the outer sheath (25) in such a way that the moulded part and the outer sheath tightly seal the connecting end or the terminal end in a hermetic fashion.

12. The method according to Claim 11, **characterized in that** the outer sheath (25) of the strip heater cable (20) is welded to the moulded part (30, 70) by means of a heatable two-jaw tool, wherein the welding process is preferably carried out in two stages such that the fluoropolymer material of the moulded part and of the outer sheath is only melted on in the first stage and then fused together under the influence of pressure in the second stage.

13. The method according to Claim 11 or 12 for manufacturing an encapsulation (10) according to one of Claims 6-8, **characterized in that** the insulation of the pigtails (40) is welded to the inner surfaces of the connection pieces (24) in a separate welding process.

## Revendications

1. Blindage (10) pour l'extrémité de raccordement ou pour l'extrémité terminale d'un câble de ruban de chauffe électrique (20), qui possède, dans son âme, plusieurs conducteurs électriques (21, 24) et, au-dessus de l'âme, une gaine extérieure isolante (25) en un matériau fluorpolymère thermoplastique, **caractérisé en ce qu'**il est fait appel à une pièce de forme (30, 70) recevant une section d'extrémité de l'âme du ruban de chauffe et réalisée également en un matériau fluorpolymère thermoplastique, qui peut être soudé avec celui de la gaine extérieure (25) du ruban de chauffe et qui est soudé de sorte qu'il entoure, avec celui-ci, l'extrémité de raccordement ou l'extrémité terminale de manière hermétiquement étanche.

2. Blindage selon la revendication 1, **caractérisé en ce que** la pièce de forme (30, 70) présente une première section (31, 71) avec une surface d'enveloppe cylindrique et, adjacente à celle-ci, du côté du ruban de chauffe, une deuxième section (32, 72) qui a une forme de demi-coquille, et **en ce que** la section d'extrémité de l'âme du ruban de chauffe est posée dans la deuxième section en forme de demi-coquille et la gaine extérieure (25) du ruban de chauffe est passée par-dessus la deuxième section (32, 72) et est soudée, au-delà de celle-ci, avec la surface d'enveloppe cylindrique de la première section (31, 71).

3. Blindage selon la revendication 2, **caractérisé en ce que** des extrémités libres des conducteurs du câble de ruban de chauffe situés à l'extrémité de raccordement du câble de ruban de chauffe (20) sont reliées individuellement avec des extrémités dénudées de torons de raccordement isolés (40), les torons de raccordement (40) passant par au moins une ouverture (37), de préférence cependant par une ouverture (37) chacun, dans la première section (31) de la pièce de forme (30).

4. Blindage selon la revendication 3, **caractérisé en ce que** les extrémités libres des conducteurs (21, 24) du câble de ruban de chauffe (20) sont reliées avec les extrémités dénudées des torons de raccordement (40) par le biais de raccords à sertir (50) et **en ce que** les raccords à sertir (50) sont disposés dans la deuxième section en forme de demi-coquille (32) de la pièce de forme (30).

5. Blindage selon l'une des revendications 3 ou 4, **caractérisé en ce que** la pièce de forme (30) possède, dans une troisième section (33), diamétralement opposée à la deuxième section (32), plusieurs manchons tubulaires (34) réalisés d'un seul tenant avec la première section (31) pour le passage des torons de raccordement (40).

6. Blindage selon la revendication 5, **caractérisé en ce que** l'isolation des torons de raccordement (40) est réalisée dans le même matériau que la pièce de forme (30) et **en ce que** l'isolation des torons de raccordement (40) est soudée de manière étanche avec la surface intérieure des manchons (34) dans la troisième section (33).

7. Blindage selon l'une des revendications 1 à 6, **caractérisé en ce que** la section d'extrémité de l'âme du ruban de chauffe est scellée dans la pièce de forme (30, 70) à l'aide d'un produit d'étanchéité, notamment un gel polyuréthane ou une résine époxy ou une colle cyanoacrylate résistante à la chaleur.

8. Blindage selon l'une des revendications 1 à 7, **caractérisé en ce que** l'âme du câble de ruban de chauffe (20) présente deux conducteurs (21) parallèles prévus pour l'alimentation électrique, disposés parallèlement côte à côte et noyés dans un matériau résistif (22), une isolation (23) entourant ces conducteurs, et celle-ci étant entourée d'un blindage conducteur (24).

9. Blindage selon la revendication 2, **caractérisé en ce que**, à l'extrémité terminale du câble de ruban de chauffe (20), la section d'extrémité de l'âme du ruban de chauffe est enfoncée dans un trou borgne (73) ménagé dans la première section (71) de la pièce de forme (70), depuis la deuxième section (72) de celle-ci.

10. Blindage selon l'une des revendications 1 à 9, **caractérisé en ce que** la pièce de forme (30, 70) a la forme d'une pièce allongée ayant approximativement la même section que le câble de ruban de chauffe (20).

11. Procédé pour la fabrication d'un blindage (10) pour l'extrémité de raccordement ou pour l'extrémité terminale d'un câble de ruban de chauffe électrique (20), qui possède, dans son âme, plusieurs conducteurs électriques (21, 24) et, au-dessus de l'âme, une gaine extérieure isolante (25) en un matériau fluorpolymère thermoplastique,
**caractérisé en ce que**
il est fait appel à une pièce de forme (30, 70) recevant une section d'extrémité de l'âme du ruban de chauffe et réalisée également en un matériau fluorpolymère thermoplastique, qui peut être soudée avec la gaine extérieure (25) du ruban de chauffe, **en ce que** la pièce de forme (30, 70) passe, conjointement avec l'âme du câble de ruban de chauffe, par une extrudeuse lors de la mise en place de la gaine extérieure (25) du câble de ruban de chauffe,
et **en ce que** le matériau fluorpolymère thermoplastique de la pièce de forme (30, 70) est soudé avec le matériau fluorpolymère thermoplastique de la gaine extérieure (25) du câble de ruban de chauffe de sorte qu'il entoure, avec celui-ci, l'extrémité de raccordement ou l'extrémité terminale de manière hermétiquement étanche.

12. Procédé selon la revendication 11, **caractérisé en ce que** la gaine extérieure (25) du câble de ruban de chauffe (20) est soudée avec la pièce de forme (30, 70) au moyen d'un outil à deux mâchoires pouvant être chauffé, le soudage s'effectuant de préférence en deux étapes, de sorte que, au cours de la première étape, le matériau fluorpolymère de la pièce de forme et de la gaine extérieure commence à fondre et que ce n'est qu'au cours de la seconde étape qu'il fond ensemble, sous l'effet d'une pression.

13. Procédé selon l'une des revendications 11 ou 12 pour la réalisation d'un blindage (10) selon l'une des revendications 6 à 8, **caractérisé en ce que** l'isolation des torons de raccordement (40) est soudée avec la surface intérieure des manchons (24) au cours d'une opération de soudage séparée.
